(19) Europäisches Patentamt
European Patent Office
Office européen des brevets

(11) **EP 0 652 663 B1**

(12) **FASCICULE DE BREVET EUROPEEN**

(45) Date de publication et mention
de la délivrance du brevet:
**29.03.2000 Bulletin 2000/13**

(51) Int Cl.⁷: **H04L 25/03**

(21) Numéro de dépôt: **94402488.4**

(22) Date de dépôt: **04.11.1994**

(54) **Egalisateur fonctionnant en domaine fréquentiel**

Frequenzbereichsentzerrer

Frequency domain equaliser

(84) Etats contractants désignés:
**AT BE CH DE DK ES GB GR IE IT LI LU MC NL PT SE**
Etats d'extension désignés:
**SI**

(30) Priorité: **08.11.1993 FR 9313239**

(43) Date de publication de la demande:
**10.05.1995 Bulletin 1995/19**

(73) Titulaire: **SAT (Société Anonyme de Télécommunications),Société Anonyme 75783 Paris Cédex 16 (FR)**

(72) Inventeur: **Sari, Hikmet
F-94500 Créteil (FR)**

(74) Mandataire: **Bloch, Gérard et al
2, square de l'Avenue du Bois
75116 Paris (FR)**

(56) Documents cités:
**US-A- 3 679 882**

- **IEE PROCEEDINGS E. COMPUTERS & DIGITAL TECHNIQUES, vol.128, no.6, Novembre 1981, STEVENAGE GB pages 239 - 244 CORSINI ET AL. 'Adaptive equalisation of discrete channels via fast convolution techniques'**
- **IBM TECHNICAL DISCLOSURE BULLETIN, vol.21, no.1, Juin 1978, NEW YORK US pages 343 - 344 CLOSS ET AL. 'Frequency domain receiver with dual-mode timing recovery'**

## Description

L'invention concerne tout d'abord un procédé de transmission de signaux numériques, dans lequel on émet les signaux par modulation d'une fréquence porteuse et, en réception, on égalise, dans le domaine fréquentiel, les signaux reçus avant de les faire repasser dans le domaine temporel pour en effectuer la reconnaissance. Cette invention s'applique, notamment, aux transmissions hertziennes, mais peut également être utilisée pour tout autre type de transmission, par exemple par câble.

La transmission de signaux, par voie hertzienne, tend actuellement à s'effectuer sous forme numérique et non plus analogique. Ainsi, la diffusion de programmes de radio ou de télévision sous forme numérique permet, en théorie, de restituer, à la réception, des signaux analogiques de sons et d'images exempts de défauts dus aux perturbations dans le canal de transmission hertzienne. En effet, un état d'un signal numérique reçu, même entaché de bruit, est correctement détecté et seule une perturbation importante, peu probable, pourrait entraîner une erreur, par détection d'un état autre que celui émis. En effet, la transmission du canal hertzien peut présenter ponctuellement des quasi-extinctions dues par exemple à la composition soustractive de trains homologues de signaux qui, bien que comportant des signaux identiques, sont différemment retardés et donc différemment déphasés et atténués car ils ont suivi des trajets différents. Il faut alors, le cas échéant, effectuer une compensation des distorsions de propagation. La numérisation permet d'associer aux signaux un mot de code de détection et de correction des erreurs qui, si besoin est, accroît encore la robustesse de la transmission vis-à-vis des perturbations, en corrigeant les erreurs de détection sans accroître exagérément le nombre de signaux à transmettre.

On connaît déjà, par le document IEE Proceedings E. COMPUTERS & DIGITAL TECHNIQUES, vol. 128 N° 6, Novembre 1981, STEVENAGE GB, pages 239-244, CORSINI et al. "Adaptive equalisation of discrete channels via fast convolution techniques", un égaliseur dans lequel le signal modulé reçu passe dans le domaine fréquentiel pour y être égalisé avant de repasser dans le domaine temporel, en vue d'effectuer la reconnaissance. La démodulation nécessaire à la réception des signaux n'y est pas enseignée.

IBM Technical Disclosure Bulletin, vol. 21 N° 1, p. 343-344 enseigne de démoduler les signaux après égalisation fréquentielle, de mesurer l'erreur entre le signal à démoduler et le signal démodulé et de la convertir dans le domaine fréquentiel pour égaliser les signaux ultérieurs.

La présente invention vise à effectuer une réception de signaux numériques qui présente une sensibilité encore plus réduite au bruit et aux distorsions du signal, sans pour autant diminuer l'efficacité spectrale de la modulation.

A cet effet, l'invention concerne un procédé du type mentionné ci-dessus, caractérisé par le fait qu'on effectue une étape de décision pour reconnaître les signaux après égalisation, on mesure des erreurs de phase des signaux d'après des signaux antérieurs égalisés et on détermine des coefficients complexes de rotation de phase servant à l'égalisation de signaux ultérieurs ainsi qu'à une correction des phases des signaux temporels ultérieurs, après leur égalisation.

Ainsi, on adapte l'égalisation de façon continue à partir des erreurs de phase subsistant en aval de celle-ci, ce qui réalise une boucle d'asservissement qui tend à réduire les erreurs présentées par les signaux ultérieurs. En particulier, les défauts du canal de transmission et leur évolution sont pris en compte et compensés.

Avantageusement, on détermine, pour un bloc de signaux, des erreurs résiduelles des signaux venant de retourner dans le domaine temporel, erreurs que l'on compose pour calculer une erreur quadratique que l'on fait passer dans le domaine fréquentiel, afin d'appliquer un ensemble de corrections à des raies de modulation, lors de l'égalisation de la porteuse et on applique l'ensemble de corrections aux raies de modulation par multiplication par un coefficient spécifique à chaque raie, obtenu en retranchant, à un coefficient antérieur, un nombre complexe proportionnel à l'erreur, dans le domaine fréquentiel, relative à la raie concernée et proportionnel à un signal conjugué d'un signal représentant la raie considérée juste après transformation du Fourier.

On réduit ainsi l'énergie du bruit subsistant.

Avantageusement encore, par soustraction d'une fréquence (5) proche de celle de la porteuse et indépendante des variations de celle-ci, on transpose, avant égalisation, la porteuse reçue au voisinage d'une fréquence nulle.

Dans un premier mode de réalisation, avant émission, on regroupe les signaux à émettre par blocs de taille fixée que l'on complète chacun par un motif circulaire et, en réception, l'égalisation dans le domaine fréquentiel est appliquée à chaque bloc, après en avoir ôté le motif circulaire. Sur ce sujet, on peut citer en référence l'ouvrage "Theory and Application of Digital Signal Processing" de L.R. Rabinet et B. Gold, Prentice Hall, 1975.

On compense ainsi, à l'émission, les "effets de bord" qui, dans les calculs de la transformée de Fourier, créent une distorsion pour certains signaux du fait qu'une transformation de Fourier discrète ne porte que sur un nombre limité de points, ce qui crée une troncature.

Dans un deuxième mode de réalisation, en réception, on regroupe les signaux reçus par blocs de taille fixée que, après conversion en données numériques. on complète chacun, à une extrémité, par une séquence de taille fixée de données numériques de valeur nulle débordant temporellement sur un bloc adjacent et, après égalisation et retour dans le domaine temporel, on additionne terme à terme les données égalisées qui sont dans les zones de recouvrement et les signaux égalisés du bloc adjacent qui y correspondent temporellement.

La compensation ci-dessus est dans ce cas effectuée après transmission, sans nécessité d'effectuer un traitement en émission ni de reconnaître des positions de blocs reçus.

Avantageusement toujours, en réception, on peut encore regrouper les signaux par blocs de taille fixée se recouvrant partiellement, avant d'effectuer l'égalisation sur les blocs, et, après égalisation, on élimine ceux des signaux égalisés qui proviennent de signaux reçus se trouvant dans la zone de recouvrement de deux blocs successifs.

Le traitement n'intervient ainsi que sur les seuls signaux transmis.

L'invention concerne aussi un récepteur de signaux numériques transmis par modulation d'une porteuse, comportant des moyens de décision pour, en fonction des signaux reçus, prendre une décision de reconnaissance de signaux émis, comportant

- des moyens de calcul pour effectuer sur les signaux reçus une transformation de Fourier discrète directe fournissant un spectre de signaux de raies fréquentielles de la porteuse modulée,

- des moyens d'égalisation pour égaliser entre eux les signaux de raie en fonction de la distorsion de propagation estimée d'après un signal de référence,

- les moyens de calcul étant agencés pour appliquer au spectre des signaux de raies égalisés une transformation de Fourier discrète inverse et en fournir le résultat temporel aux moyens de décision ,

caractérisé par le fait que les moyens de décision comportent des moyens de rotation de phase agencés pour transmettre, avec rotation de phase, les signaux temporels égalisés à des moyens de mesure d'erreurs de phase des dits signaux par rapport à des signaux de référence, les moyens de mesure d'erreurs de phase étant agencés pour commander les moyens d'égalisation et les moyens de rotation de phase.

L'invention sera mieux comprise à l'aide de la description suivante du mode de réalisation préféré d'un émetteur et d'un récepteur pour la mise en oeuvre du procédé de l'invention, en référence au dessin annexé, sur lequel :

- la figure 1 est un schéma par blocs présentant la liaison de transmission de signaux numériques de l'invention,

- la figure 2 illustre un premier mode de réalisation de l'égaliseur fréquentiel du récepteur,

- les figures 3 à 5 illustrent respectivement trois variantes du procédé de transmission de l'invention,

- la figure 6 est un schéma synoptique du démodulateur numérique du récepteur et

- la figure 7 illustre un mode de réalisation de l'adaptation de coefficients correcteurs de l'égaliseur.

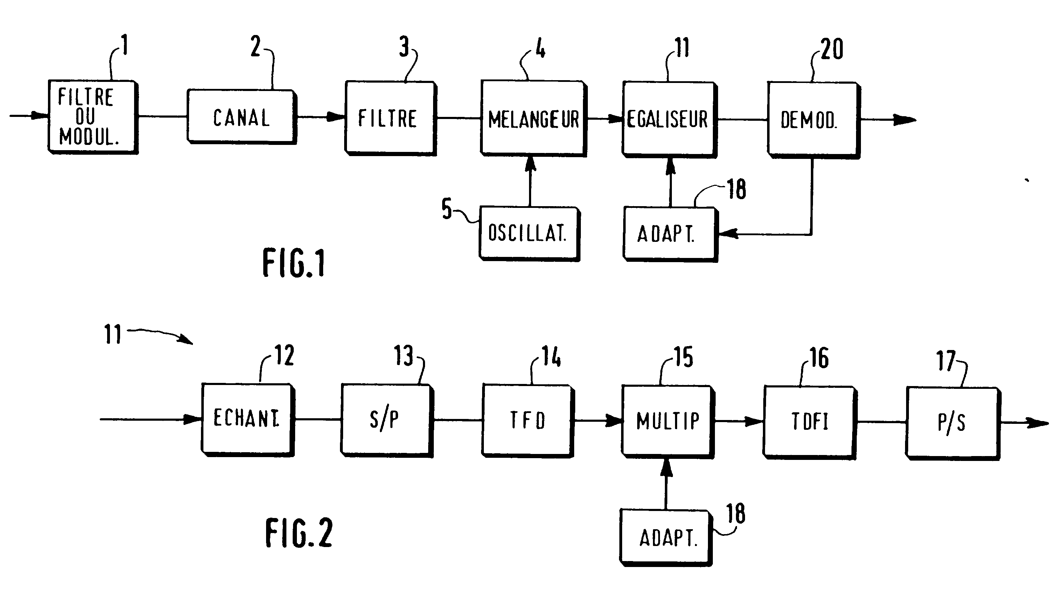

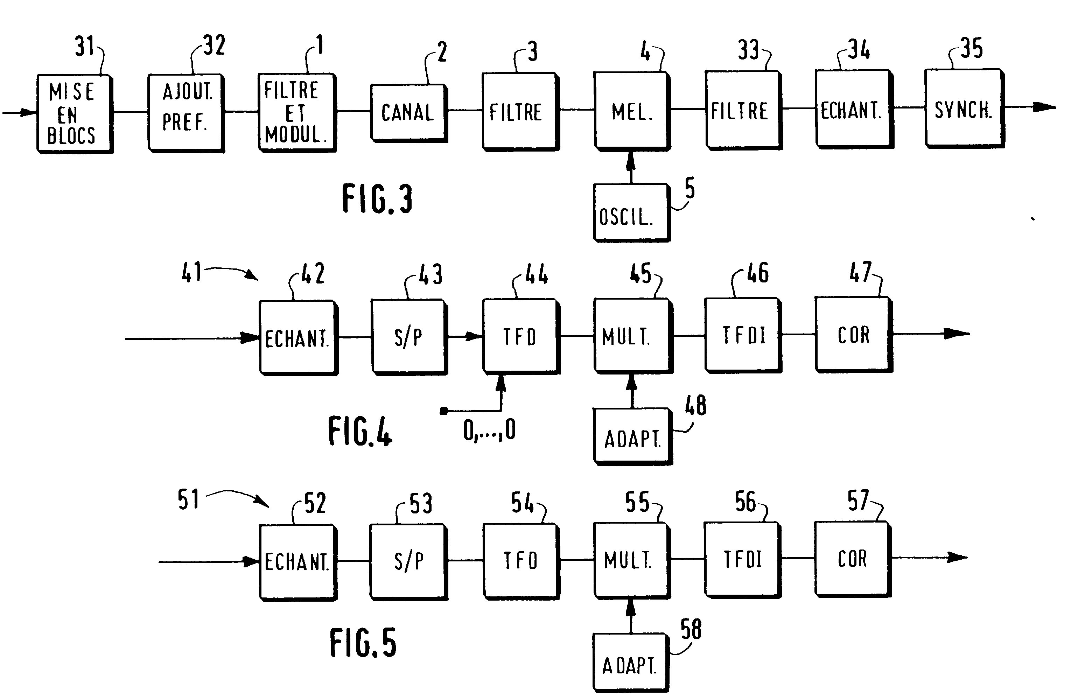

Le principe du procédé de transmission de signaux numériques est illustré par le schéma synoptique de la figure 1. Les signaux numériques à émettre, ici par voie hertzienne, sont appliqués à un émetteur hertzien 1 pour moduler une fréquence porteuse, la modulation occupant une bande de fréquences entourant la porteuse. Un filtrage est ici prévu pour limiter la bande-passante nécessaire. La porteuse modulée traverse le canal hertzien de transmission 2 pour parvenir à un récepteur 3 où elle subit un filtrage tendant à éliminer les signaux hors bande. La porteuse modulée est ensuite appliquée à un mélangeur 4 recevant la sortie d'un oscillateur libre 5, oscillant à la fréquence nominale de la porteuse mais non asservi à celle-ci et ne suivant donc pas ses variations, ou dérives, éventuelles.

La fréquence porteuse en sortie du mélangeur 4 est ainsi ramenée à une fréquence nulle, ou faible, et la modulation en bande de base ainsi obtenue est appliquée à un égaliseur fréquentiel 11 alimentant un démodulateur numérique 20 prenant les décisions de reconnaissance des signaux successifs. Une sortie du démodulateur 20 fournit, à un circuit d'adaptation 18 de l'égaliseur 11, des signaux numériques représentant des erreurs mesurées entre l'état des signaux successifs égalisés, entachés de bruit, et l'état correspondant prévu qui a été reconnu.

La figure 2 illustre un premier mode de réalisation de l'égaliseur fréquentiel 11. Un circuit d'échantillonnage 12 reçoit la porteuse modulée et l'échantillonne avec numérisation des échantillons, à la fréquence 1/T, T étant la période de modulation, ou durée symbole, pendant laquelle un signal est émis. Les signaux échantillonnés successifs sont présentés en parallèle par blocs de N signaux (N entier positif) dans un convertisseur série/parallèle 13 relié en sortie à un bloc de calcul 14 effectuant une transformation de Fourier discrète directe sur l'ensemble de N signaux ou points d'échantillonnage. Le bloc de calcul 14 produit ainsi un spectre de raies fréquentielles. L'amplitude et la phase de chaque raie, représentées par des données numériques, sont appliquées à un multiplieur numérique, spécifique à la raie, appartenant à un ensemble 15 de multiplieurs et dont le coefficient de multiplication, complexe, est ajusté de façon à compenser l'atténuation et le déphasage subis dans le canal de transmission 2 par la composante fréquentielle de modulation à la fréquence de la raie considérée.

La modulation de la porteuse par chaque signal, étalée dans toute la bande transmise et représentée par l'ensemble des raies, est ainsi, comme expliqué plus loin, débarrassée des distorsions dues à la propagation dans le canal 2.

Les données du bloc représentant les amplitudes et phases des raies ainsi égalisées subissent ensuite, dans un bloc de calcul 16, une transformation de Fourier discrète inverse qui ramène la porteuse modulée dans le domaine temporel, c'est-à-dire que chaque signal temporel est obtenu à partir des données représentant les amplitudes et phases des raies égalisées. Un convertisseur numérique parallèle/série 17 transmet ensuite en série les signaux temporels issus au bloc de calcul 16 au démodulateur numérique 20. Ainsi, les quelques raies fortement affaiblies dans le canal 2, dont l'amplification élevée de l'amplitude, lors de l'égalisation, est imprécise, car entachée de bruit, n'ont qu'une influence très limitée dans le signal temporel composite en sortie du convertisseur 17. Il peut même être prévu, comme expliqué plus loin, de limiter l'amplification des raies très atténuées, afin de ne pas dégrader le rapport signal/bruit.

Le circuit d'adaptation 18 reçoit, entre autres, en retour du démodulateur 20 des informations d'erreur de phase servant à régler la phase des coefficients complexes des multiplieurs 15.

Une première variante du procédé de transmission est illustrée par la figure 3. Afin de compenser la distorsion due au fait que la transformation de Fourier discrète porte sur un nombre N fini, alors que la théorie prévoit un signal de durée infinie, il est effectué à l'émission un traitement de compensation préalable de cette distorsion.

Les signaux à émettre sont, par un circuit 31 de mise en blocs, regroupés par blocs de N points (N déjà défini) et, par un circuit 32, il est ajouté à chaque bloc un préfixe (ou suffixe) circulaire. Ainsi, ayant un bloc de N signaux à émettre $(a_0, a_1, ..,a_{N-1})$, on le complète par un préfixe circulaire de M symboles pour former un bloc de longueur de M + N, que l'on émet. Le motif, préfixe ou suffixe, est dit circulaire car il a des influences successives, lors des calculs de convolution, avec à chaque fois un décalage de position. Le signal issu du mélangeur 4 traverse un filtre passe-bas 33 puis un échantillonneur 34 fonctionnant à la cadence 1/T, qui transmet le bloc reçu $(r_0, r_1,...,r_{N+M-1})$ à un circuit de synchronisation bloc 35 qui reconnaît la position de chaque bloc et qui enlève les M derniers échantillons et transmet le bloc $(r_0, r_1,..., r_{N-1})$ obtenu, ainsi pré-compensé, à l'égaliseur 11, pour le passage dans le domaine fréquentiel. Cette méthode d'utilisation d'un préfixe (ou suffixe) circulaire rend la convolution linéaire du canal de transmission 2 équivalente à une convolution circulaire, donc du type de celle appliquée pour la transformation de Fourier discrète.

Une deuxième variante du procédé de transmission, utilisant une technique "recouvrement et addition", est illustrée par la figure 4. La porteuse en bande de base traverse un échantillonneur-numériseur 42, de cadence 1/T, et parvient à un convertisseur série/parallèle 43 à L points alimentant un bloc de calcul 44 de l'égaliseur fréquentiel 41.

Le bloc de calcul 44 reçoit aussi, pour chaque bloc de L échantillons numérisés, N-L données numériques complémentaires de valeur zéro.

Le bloc complété à une extrémité $(x_0, x_1,...,x_{L-1}, 0,...,0)$ , de longueur N, traverse le bloc de calcul 44 où il subit la transformation de Fourier discrète directe qui le transforme en un bloc $(X_0, X_1,..., X_{N-1})$. Ce bloc est multiplié terme à terme, dans les multiplieurs 45 commandés par le circuit d'adaptation 48, par un bloc (C0, C1,..., CN-1) qui représente la réponse fréquentielle de l'égaliseur 41.

On obtient ainsi un bloc $(Y_0, Y_1,...,Y_{N-1})$ où $Y_i = C_i.X_i$, avec i = entier de 0 à N-1, qui subit une transformation de Fourier discrète inverse dans l'autre bloc de calcul 46 de l'égaliseur 41, fournissant un bloc de signaux temporels $(y_0, y_1,..., y_{N-1})$.

Comme le bloc de calcul 44 fonctionne à une cadence 1/LT, il y a recouvrement, ou débordement, sur N-L points entre deux blocs successifs après la transformation de Fourier discrète inverse. La sortie de l'égaliseur 41 est la somme, calculée dans un circuit de correction 47, des blocs de longueur N présentant le recouvrement sur les N-L points aux extrémités des blocs. Pour le bloc en sortie de rang temporel n, représenté par y'o(n), y'$_1$(n),..., y'$_L$(n),..., y'$_{N-1}$ (n)), on a les relations suivantes en fonctions des 2 blocs de rangs respectifs n-1 et n+1 l'encadrant :

$$y'_0(n) = y_0(n) + y_L(n-1)$$

$$y'_1(n) = y_1(n) + y_{L+1}(n-1)$$

$$------------------------$$

$$y'_{N-L-1}(n) = y_{N-L-1}(n) + y_{N-1}(n-1)$$

$$y'_{N-L}(n) = y_{N-L}(n)$$

$$------------------------$$

$$y'_{L-1}(n) = y_{L-1}(n)$$

$$y'_L(n) = y_L(n) + y_0(n+1)$$

$$y'_{L+1}(n) = y_{L+1}(n) + y_1(n+1)$$

$$------------------------$$

$$y'_{N-1}(n) = y_{N-1}(n) + y_{N-L-1}(n+1)$$

L'égalisation peut ainsi fonctionner sans préfixe ou suffixe, donc sans perte d'efficacité spectrale de la porteuse modulée.

La figure 5 illustre une troisième variante du procédé de transmission, utilisant une technique de "recouvrement et sélection". Les éléments de la figure 5 sont homologues de ceux de la figure 4 et le chiffre des unités de leur référence est la même, précédé de la dizaine 5. Dans cette variante, on ramène la convolution circulaire de l'égaliseur à une convolution linéaire. Pour cela, toutes les L périodes de modulation, on effectue une transformation de Fourier discrète fournissant un bloc $(X_0, X_1,..., X_{N-1})$ dans le domaine fréquentiel à partir d'un bloc temporel $(x_0, X_1,..., x_{N-1})$ de signaux reçus. Le bloc $(X_0, X_1,..., X_{N-1})$ est multiplié terme à terme par le bloc de coefficients complexes $(C_0, C_1,..., C_{N-1})$ représentant la fonction de transfert de l'égaliseur, ce qui fournit un bloc $(Y_0, Y_1,...,Y_{N-1})$ fréquentiel. La transformation de Fourier discrète inverse le transforme en un bloc temporel de signaux égalisés $(y_0, y_1,...,y_{N-1})$ issu du bloc de calcul 56, d'où est ensuite éliminée, dans le circuit de correction 57, la portion du bloc correspondant à la zone de recouvrement temporel entre blocs, dont les produits de convolution sont erronés.

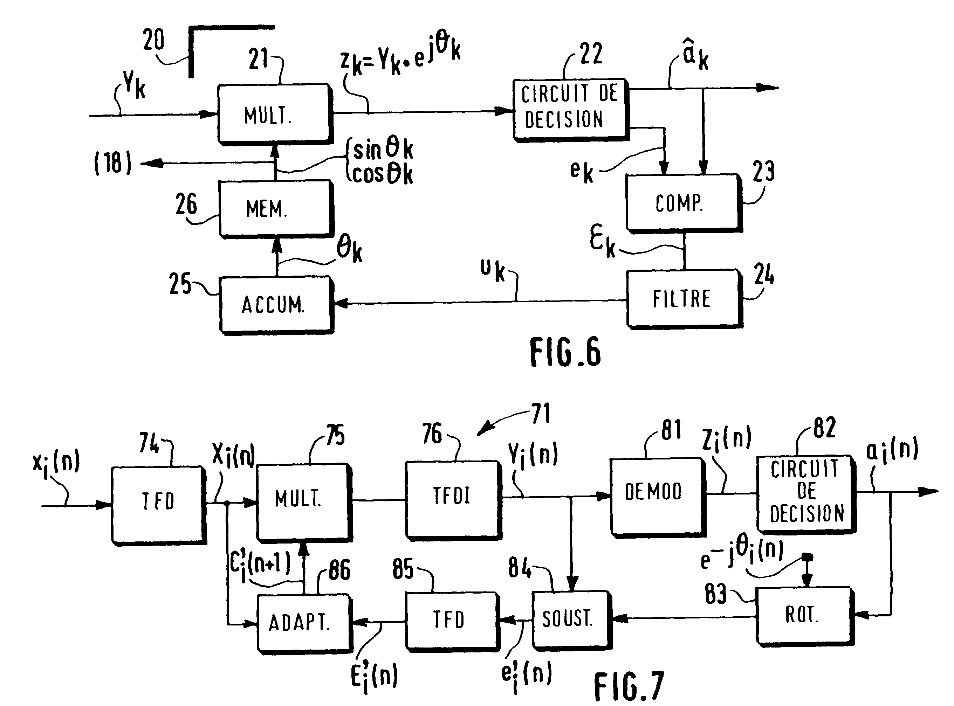

La figure 6 est un schéma synoptique du démodulateur numérique 20, situé en aval de l'égaliseur 11 et en recevant successivement les signaux temporels égalisés $y_k$. Le démodulateur 20 comporte un circuit numérique multiplieur complexe 21 recevant les signaux numériques temporels égalisés $y_k$ (k entier représentant le rang temporel du signal) et les transformant en signaux numériques corrigés $z_k$ appliqués à un circuit de décision 22. Le circuit de décision 22 compare le signal $z_k$, et en particulier sa phase, à plusieurs signaux numériques représentant les états possibles de modulation et choisit un signal $â_k$ estimé être celui qui diffère le moins du signal corrigé $z_k$. Le circuit de décision 22 calcule un signal d'erreur $e_k = z_k - â_k$ qu'il applique à un comparateur numérique de phase 23, recevant le signal âk comme référence. Le comparateur 23 fournit un signal résultant d'erreur de phase $\varepsilon_k$ qui subit un filtrage passe-bas dans un filtre numérique 24, pouvant être transverse ou récursif, avant d'être appliqué, sous forme d'un signal $u_k$, à un accumulateur parfait 25.

L'accumulateur 25 fonctionne en compteur ou décompteur et fournit une valeur d'angle $\theta_k$ servant d'adresse pour pointer une table de sinus, cosinus en mémoire morte 26. Les amplitudes en quadrature, $\sin \theta_k$ et $\cos \theta_k$, définissant l'angle de correction θk sont fournies en retour au circuit multiplieur 21 pour correction de la phase des signaux égalisés ultérieurs, de la forme :

$$e^{j\theta}k = \cos \theta_k + j.\sin \theta_k,$$

soit donc

$$z_k = y_k.e^{j\theta k}$$

Ces mêmes valeurs de $\sin \theta_k$ et $\cos \theta_k$ sont aussi fournies aux multiplieurs 15, pour une correction en amont du démodulateur 20. Ainsi, étant effectuée en aval de l'égaliseur, la démodulation intervient après application des corrections fonction des erreurs précédemment mesurées, donc avec une distorsion réduite, et sans entraîner les retards considérables dus à la transformée de Fourier dans la boucle du récepteur.

Le circuit d'adaptation 18 de l'égaliseur 11 fonctionne à partir d'un bloc de signaux prédéterminés ($a_0$, $a_1$,..., $a_{N-1}$), transmis périodiquement après K-1 blocs de signaux (K entier positif), K étant d'autant plus élevé que le canal de transmission 2 est stable. Le bloc prédéterminé ($A_0$, $A_1$,...; $A_{N-1}$) correspond à la transformée de Fourier discrète du bloc prédéterminé ($a_0$, $a_1$,..., $a_{N-1}$).

Un bloc (x0, x1,...,xN-1) reçu, à l'entrée de l'égaliseur 11, correspondant à l'émission d'un bloc ($a_0$, $a_1$,...,$a_{N-1}$), est transformé, par transformation de Fourier rapide discrète, en un bloc ($X_0$, $X_1$,...,$X_{N-1}$). Après retour dans le domaine temporel, on doit retouver le bloc émis ($a_0$, $a_1$,...,$a_{N-1}$) en sortie du démodulateur 20 et donc ($a_0 e^{-j\theta 0}$, $a_1 e^{-j\theta 1}$,..., $a_{N-1} e^{-j\theta N-1}$) en sortie de l'égaliseur 11, compte tenu de la correction de phase $e^{j\theta i}$ (i = 0 à N-1) apportée en aval.

Si l'on appelle A' = ($A'_0$, $A'_1$,...,$A'_{N-1}$) la transformée de Fourier discrète du bloc ($a_0 e^{-j\theta 0}$, $a_1 e^{-j\theta 1}$,...,$a_{N-1} e^{-j\theta N-1}$), la sortie Y = ($Y_0$, $Y_1$,...,$Y_{N-1}$) des multiplieurs 15 de l'égaliseur doit être égale au bloc A'.

Ayant $Y_i = C_i . X_i$, on en déduit les coefficients $C_i = A'_i / X_i$. Comme évoqué plus haut, les coefficients $C_i$ peuvent être limités à une valeur maximale $C_i = A'_i / S$ lorsque le signal Xi a un module inférieur au seuil S.

Un autre mode de réalisation du circuit d'adaptation de l'égaliseur est illustré par la figure 7. Les signaux reçus $x_i(n)$ traversant le bloc de calcul 74 de l'égaliseur 71 pour y subir la transformation de Fourier discrète et fournir les signaux $X_i(n)$ qui sont égalisés dans le circuit multiplieur 75 avant de subir la transformation de Fourier discrète inverse dans le bloc de calcul 76, fournissant les signaux $y_i(n)$. Les signaux $y_i(n)$ sont transformés en les signaux $z_i(n)$ dans le démodulateur 81 alimentant le circuit numérique de décision 82, qui fournit les signaux numériques $a_i(n)$ reconnus. Les signaux numériques d'erreur instantanée, de la forme $e_i(n) = z_i(n) - a_i(n)$, sont convertis en signaux "ramenés" à la sortie de l'égaliseur 71 par une rotation de phase, définie par $e^{-j\theta i}(n)$ et effectuée dans un circuit 83 dont la sortie $e'_i(n) = y_i(n) e^{-j\theta i}(n)$ . $a_i(n)$ est appliquée à un soustracteur 84 recevant les signaux $y_i(n)$ issus de l'égaliseur 71. Les signaux numériques de différence $e'_i(n) = y_i(n) - e^{-j\theta i}(n)$ . $a_i(n)$ subissent, dans un bloc de calcul 85, une transformation de Fourier discrète les faisant passer dans le domaine fréquentiel et déterminant donc une erreur $E'_i(n)$ pour chaque raie de rang i.

On définit alors une erreur quadratique cumulée dans le domaine fréquentiel :

$$J(n) = \sum_{i=0}^{N-1} |E'_i(n)|^2$$

correspondant à l'erreur quadratique dans le domaine temporel :

$$J(n) = \sum_{i=0}^{N-1} |e'_i(n)|^2$$

L'optimisation des coefficients $C_i$ de l'égaliseur 71 est alors effectuée, pour chaque raie i, par détermination du gradient temporel de la fonction J(n). évoluant à mesure de la réception des blocs de rang temporel n successifs. On détermine les nouveaux coefficients :

$$C_i(n+1) = C_i(n) - \frac{J(n)}{C_i(n)}$$

soit

$$C_i\,(n+1) = C_i\,(n) - \qquad \frac{|E'_i(n)|^2}{C_i\,(n)}$$

qui peut encore s'écrire

$$C_i\,(n+1) = C_i(n) - .X^*_i\,(n)\,.\,E'_i(n)$$

$X^*_i$ étant le complexe conjugué de $X_i(n)$ issu de la transformation de Fourier discrète.

On comprendra que tout ou partie des éléments du récepteur peut être intégré dans un bloc de calcul commun, tel qu'un microprocesseur. De même, les transformations temps/fréquence et fréquence/temps peuvent être effectuées par tout algorithme approprié et en particulier par transformations de Fourier modifiées.

**Revendications**

1. Procédé de transmission de signaux numériques, dans lequel on émet les signaux par modulation d'une fréquence porteuse et, en réception, on égalise (11), dans le domaine fréquentiel, les signaux reçus avant de les faire repasser dans le domaine temporel pour en effectuer le reconnaissance (20), caractérisé par le fait que, lors de l'étape de décision pour reconnaître les signaux après égalisation, on mesure des erreurs de phase des signaux ($\varepsilon_k$) d'après des signaux antérieurs égalisés et on détermine des coefficients complexes de rotation de phase servant à l'égalisation (18) de signaux ultérieurs ainsi qu'à une correction (21) des phases des signaux temporels ($y_i\,(n)$) ultérieurs, après leur égalisation.

2. Procédé selon la revendication 1, dans lequel, on détermine, pour un bloc de signaux, des erreurs résiduelles ($e'_i$ (n)) des signaux venant de retourner dans le domaine temporel ($y_i(n)$), erreurs que l'on compose pour calculer une erreur quadratique (J(n)) que l'on fait passer dans le domaine fréquentiel (85), afin d'appliquer (86) un ensemble de corrections à des raies de modulation, lors de l'égalisation de la porteuse modulée.

3. Procédé selon la revendication 2, dans lequel on applique l'ensemble de corrections aux raies de modulation par multiplication par un coefficient ($C_i\,(n+1)$) spécifique à chaque raie, obtenu en retranchant, à un coefficient antérieur ($C_i\,(n)$), un nombre complexe proportionnel à l'erreur ($E'_i(n)$), dans le domaine fréquentiel, relative à la raie concernée et proportionnel à un signal conjugué d'un signal ($X^*_i\,(n)$) d'un signal ($X_i\,(n)$) représentant la raie considérée juste après transformation de Fourier.

4. Procédé selon l'une des revendications 1 à 3, dans lequel, par soustraction d'une fréquence (5) proche de celle de la porteuse et indépendante des variations de celle-ci, on transpose, avant égalisation, la porteuse reçue au voisinage d'une fréquence nulle.

5. Procédé selon l'une des revendications 1 à 4, dans lequel, avant émission, on regroupe (31) les signaux à émettre par blocs de taille fixée que l'on complète (32) chacun par un motif circulaire et, en réception, l'égalisation dans le domaine fréquentiel est appliquée à chaque bloc, après en avoir ôté (35) le motif circulaire.

6. Procédé selon l'une des revendications 1 à 4, dans lequel, en réception, on regroupe (43) les signaux reçus par blocs de taille fixée (L) que, après conversion en données numériques, on complète chacun, à une extrémité, par une séquence de taille fixée (N-L) de données numériques de valeur nulle débordant temporellement sur un bloc adjacent et, après égalisation et retour dans le domaine temporel, on additionne (47) terme à terme les données égalisées qui sont dans les zones de recouvrement et les signaux égalisés du bloc adjacent qui y correspondant temporellement.

7. Procédé selon l'une des revendication 1 à 4, dans lequel, en réception, on regroupe les signaux par blocs de taille fixée (N) se recouvrant partiellement (N-L), avant d'effectuer l'égalisation (54-56) sur les blocs, et, après égalisation, on élimine (57) ceux (N-L) des signaux égalisés qui proviennent de signaux se trouvant dans la zone de recouvrement de deux blocs successifs.

**8.** Récepteur de signaux numériques transmis par modulation d'une porteuse, comportant des moyens de décision (20) pour, en fonction des signaux reçus, prendre une décision de reconnaissance de signaux émis, comportant

- des moyens de calcul (14, 16) pour effectuer sur les signaux reçus une transformation de Fourier discrète directe fournissant un spectre de signaux de raies fréquentielles de la porteuse modulée,

- des moyens d'égalisation (15) pour égaliser entre eux les signaux de raie en fonction de la distorsion de propagation estimée d'après un signal de référence,

- les moyens de calcul (14, 16) étant agencés pour appliquer au spectre des signaux de raies égalisés une transformation de Fourier discrète inverse et en fournir le résultat temporel aux moyens de décision (20),

caractérisé par le fait que les moyens de décision (20) comportent des moyens de rotation de phase (21) agencés pour transmettre, avec rotation de phase, les signaux temporels égalisés à des moyens (22, 23) de mesure d'erreurs de phase ($\varepsilon_k$) des dits signaux par rapport à des signaux de référence (âk), les moyens de mesure d'erreurs de phase (22, 23) étant agencés pour commander les moyens d'égalisation (15) et les moyens de rotation de phase (21).

**9.** Récepteur selon la revendication 8, dans lequel les moyens de décision (20) comportent un circuit accumulateur (25) agencé pour, en fonction des erreurs de phase ($\varepsilon_k$, $u_k$), adresser une mémoire (26) contenant une table trigonométrique de réglage d'un circuit numérique multiplieur (21) transmettant lesdits signaux ultérieurs à un circuit de décision (22) fournissant lesdites erreurs ($\varepsilon_k$, $u_k$).

**10.** Récepteur selon l'une des revendications 8 et 9, dans lesquels les moyens de calcul sont agencés (35) pour, avant transformation de Fourier discrète directe, reconnaître les positions de blocs de taille fixée des signaux reçus, comportant chacun un motif numérique circulaire, et pour en enlever ledit motif.

**11.** Récepteur selon l'une des revendications 8 et 9, dans lequel les moyens de calcul sont agencés (43) pour regrouper les signaux reçus par blocs de taille fixée (L) et pour, après conversion en données numériques, compléter (43) chacun, à une extrémité, par une séquence de taille fixée (N-L) de données numériques de valeur nulle débordant temporellement sur un bloc adjacent, avant d'appliquer aux blocs complétés la transformation de Fourier discrète directe et pour additionner (47) terme à terme les données égalisées qui sont dans les zones de recouvrement et les signaux égalisés du bloc adjacent qui y correspondent temporellement.

**12.** Récepteur selon l'une des revendications 8 et 9, dans lequel les moyens de calcul sont agencés (53) pour, avant la transformation de Fourier discrète, regrouper les signaux reçus par blocs de taille fixée (N) se recouvrant partiellement (N-L) dans le temps et pour, juste après la transformation de Fourier discrète inverse, éliminer (57) les signaux obtenus (N-L) provenant de signaux reçus appartenant à deux blocs.

**Patentansprüche**

**1.** Verfahren zum Übertragen von digitalen Signalen, bei dem man die Signale durch Modulation einer Trägerfrequenz sendet und beim Empfang die empfangenen Signale im Frequenzbereich entzerrt (11), bevor man sie erneut in den Zeitbereich überführt, um deren Erkennung (20) auszuführen, dadurch gekennzeichnet, daß man bei dem Entscheidungsschritt zum Erkennen der Signale nach der Entzerrung Phasenfehler der Signale ($\varepsilon_k$) gemäß früheren entzerrten Signalen mißt und komplexe Koeffizienten der Phasendrehung bestimmt, die zur Entzerrung (18) späterer Signale, sowie zu einer Korrektur (21) der Phasen der späteren zeitlichen Signale ($y_i$ (n)) nach deren Entzerrung dienen.

**2.** Verfahren nach Anspruch 1, dadurch gekennzeichnet, daß man für einen Block von Signalen Restfehler ($e'_i$ (n)) von Signalen bestimmt, die gerade in den Zeitbereich ($y_i$ (n)) zurückgekehrt sind, wobei diese Fehler zusammengesetzt werden, um einen quadratischen Fehler (J(n)) zu berechnen, den man in den Frequenzbereich (85) überführt, um eine Gesamtheit von Korrekturen auf Modulationslinien anzuwenden (86), bei der Entzerrung der modulierten Trägerfrequenz.

**3.** Verfahren nach Anspruch 2, dadurch gekennzeichnet, daß man die Gesamtheit von Korrekturen auf die Modulationslinien anwendet, durch Multiplikation mit einem Koeffizienten ($C_i$ (n+1)), der für jede Linie spezifisch ist und dadurch erhalten wird, daß von einem vorherigen Koeffizienten ($C_i$ (n)) eine komplexe, dem Fehler ($E'_i$ (n)) proportionale Zahl abgezogen wird, im Frequenzbereich, die sich auf die betroffene Linie bezieht und zu einem konjugierten Signal eines Signals ($X^*_i$ (n)) proportional ist, welches die betroffene Linie unmittelbar nach einer Fouriertransformation repräsentiert.

4. Verfahren nach einem der Ansprüche 1 bis 3, dadurch gekennzeichnet, daß man durch Subtraktion einer Frequenz (5), die in der Nähe der Trägerfrequenz liegt und unabhängig von Veränderungen der Trägerfrequenz ist, die empfangene Trägerfrequenz vor der Entzerrung in die Nähe einer Frequenz Null transponiert.

5. Verfahren nach einem der Ansprüche 1 bis 4, dadurch gekennzeichnet, daß man die zu sendenden Signale vor der Sendung in Blöcke fester Größe gruppiert (31), die man jeweils mittels eines zirkulären Musters vervollständigt (32), und wobei empfangsseitig die Entzerrung im Frequenzbereich auf jeden Block angewendet wird, nachdem das zirkuläre Muster entfernt worden ist.

6. Verfahren nach einem der Ansprüche 1 bis 4, dadurch gekennzeichnet, daß empfangsseitig die empfangenen Signale in Blöcke fester Größer (L) gruppiert werden (43), die man nach Umwandlung in digitale Daten jeweils an einem Ende mit einer Folge fester Größe (N-L) digitaler Daten vom Wert Null vervollständigt, die zeitweilig auf einen benachbarten Block übertritt, und daß man nach Entzerrung und Rückkehr in den Zeitbereich die entzerrten Daten, die sich in den Überlappungszonen befinden, und die entzerrten Signale des benachbarten Blocks, die diesen zeitweilig entsprechen, Term für Term addiert (47).

7. Verfahren nach einem der Ansprüche 1 bis 4, dadurch gekennzeichnet, daß man beim Empfang die Signale in Blöcken fester Größe (N) gruppiert, die sich teilweise überdecken (N-L), bevor man die Entzerrung (54-56) auf die Blöcke anwendet, und daß man nach der Entzerrung diejenigen (N-L) der entzerrten Signale eliminiert (57), die von Signalen stammen, welche sich in der Überlappungszone von zwei aufeinanderfolgenden Blöcken befinden.

8. Empfänger für digitale Signale, die durch Modulation einer Trägerfrequenz übertragen werden, mit einer Entscheidungseinrichtung (20), um in Funktion der empfangenen Signale eine Entscheidung zur Erkennung von gesendeten Signalen zu treffen, mit

- einer Berechnungseinrichtung (14, 16), um die empfangenen Signale einer direkten diskreten Fouriertransformation zu unterwerfen, die ein Signalspektrum von Frequenzlinien der modulierten Trägerfrequenz liefert,

- einer Entzerrungseinrichtung (15), um die Liniensignale untereinander in Abhängigkeit von der aufgrund eines Bezugssignals geschätzten Ausbreitungsverzerrung untereinander zu entzerren,

- wobei die Berechnungseinrichtung (14, 16) dafür eingerichtet ist, um auf das Spektrum der entzerrten Signale der Linien eine inverse diskrete Fouriertransformation anzuwenden, um das zeitliche Ergebnis daraus der Entscheidungseinrichtung (20) zuzuführen,

- dadurch gekennzeichnet, daß die Entscheidungseinrichtung (20) eine Einrichtung zur Phasendrehung (21) aufweist, die dafür eingerichtet ist, um die entzerrten zeitlichen Signale mit Phasendrehung an eine Einrichtung (22, 23) zur Messung von Phasenfehlern ($\varepsilon_k$) der genannten Signale in Bezug auf Bezugssignale ($\hat{a}_k$) zu übertragen, wobei die Einrichtung zur Messung von Phasenfehlern (22, 23) dafür eingerichtet ist, um die Entzerrungseinrichtung (15) und die Einrichtung zur Phasendrehung (21) anzusteuern.

9. Empfänger nach Anspruch 8, dadurch gekennzeichnet, daß die Entscheidungseinrichtung (20) eine Sammelschaltung (25) aufweist, die dafür eingerichtet ist, um in Abhängigkeit von Phasenfehlern ($\varepsilon_k$, $u_k$) einen Speicher (26) anzusprechen, der eine trigonometrische Tabelle zur Regelung einer digitalen Multiplikationsschaltung (21) enthält, welche die genannten späteren Signale an eine Entscheidungsschaltung (22) überträgt, die die genannten Fehler ($\varepsilon_k$, $u_k$) liefert.

10. Empfänger nach Anspruch 8 oder 9, dadurch gekennzeichnet, daß die Berechnungseinrichtung dafür eingerichtet ist (35), um vor der direkten diskreten Fouriertransformation die Positionen der Blöcke fester Größe von empfangenen Signalen zu erkennen, von denen jeder ein digitales zirkuläres Muster aufweist, und um das genannte Muster zu entfernen.

11. Empfänger nach einem der Ansprüche 8 oder 9, dadurch gekennzeichnet, daß die Berechnungseinrichtung dafür eingerichtet ist (43), um die empfangenen Signale in Blöcke mit fester Größe (L) zu gruppieren und um nach Umwandlung in digitale Daten jeden einzelnen an einem Endabschnitt zu vervollständigen (43), mittels einer Folge fester Größe (N-L) von digitalen Daten vom Wert Null, die zeitweilig auf einen benachbarten Block übertritt, bevor auf die vervollständigten Blöcke die direkte diskrete Fouriertransformation angewendet wird, und um die entzerrten Daten, die sich in den Überlappungszonen befinden, und die entzerrten Signale des benachbarten Blocks, die diesen zeitweilig entsprechen, Term für Term zu addieren (47).

12. Empfänger nach einem der Ansprüche 8 oder 9, dadurcn gekennzeichnet, daß die Berechnungseinrichtung dafür eingerichtet ist (53), um vor der diskreten Fouriertransformation die empfangenen Signale in Blöcke mit fester Größer (N) zu gruppieren, die sich teilweise in der Zeit überdecken (N-L), und um unmittelbar nach der inversen diskreten Fouriertransformation die erhaltenen Signale (N-L) zu eliminieren (57), die von zu zwei Blöcken gehörenden, empfangenen Signalen stammen.

## Claims

1. Process for transmitting digital signals, wherein the signals are emitted by modulation of a carrier frequency and, during reception, the signals received are equalised (11) in the frequency domain before they are returned to the time domain in order to carry out the recognition (20), characterised by the fact that, during the decision stage, in order to recognise the signals after equalisation, phase errors of the signals ($\varepsilon_k$) are measured according to previous equalised signals and complex coefficients of phase rotation are determined, serving to equalise (18) subsequent signals as well as to correct (21) the phases of the subsequent time signals ($y_i(n)$) after they have been equalised.

2. Process according to claim 1, wherein, for a block of signals, residual errors ($e'_i(n)$) of the signals which have just returned to the time domain ($y_i(n)$) are determined, these errors are configured in order to calculate a quadratic error ($J(n)$) which is passed into the frequency domain (85) in order to apply (86) a group of corrections to modulation lines when the modulated carrier is equalised.

3. Process according to claim 2, wherein the group of corrections is applied to the modulation lines by multiplication by a coefficient ($C_i(n+1)$) which is specific to each line and is obtained by removing, from an earlier coefficient ($C_i(n)$), a complex number proportional to the frequency-domain error ($E'_i(n)$) relative to the line concerned, and proportional to a conjugate signal of a signal ($X^*_i(n)$) of a signal ($X_i(n)$) representing the line concerned just after Fourier transformation.

4. Process according to one of claims 1 to 3, wherein, by subtraction of a frequency (5) close to that of the carrier and independent of the variations thereof, the carrier received is transposed, before equalisation, to the proximity of a zero frequency.

5. Process according to one of claims 1 to 4, wherein, before emission, the signals to be emitted are grouped (31) into blocks of a fixed size, which are each complemented (32) by a circular pattern and, during reception, the equalisation in the frequency domain is applied to each block after the circular pattern has been removed (35) therefrom.

6. Process according to one of claims 1 to 4, wherein, during reception, the signals received are grouped (43) into blocks of a fixed size (L) which, after conversion to digital data, are each complemented, at one end, by a sequence of fixed size (N-L) of digital data of zero value running over, in terms of time, onto an adjacent block and, after equalisation and return to the time domain, the equalised data which are in the overlapping zones and the equalised signals of the adjacent block which correspond thereto in terms of time are added together (47) term by term.

7. Process according to one of claims 1 to 4, wherein, during reception, the signals are grouped into blocks of fixed size (N) which partially overlap (N-L), before the equalisation (54-56) is carried out on the blocks, and, after equalisation, those (N-L) of the equalised signals which come from signals in the overlapping zone of two successive blocks are eliminated (57).

8. Receiver for digital signals transmitted by modulation of a carrier, comprising decision means (20) in order, according to the signals received, to take a decision relating to recognition of emitted signals, comprising

   - calculation means (14, 16) to carry out a discrete direct Fourier transformation on the signals received, providing a spectrum of signals of frequency lines of the modulated carrier,

- equalisation means (15) to equalise the line signals with each other in dependence upon the propagation distortion estimated according to a reference signal,

- the calculation means (14, 16) being arranged to apply a discrete inverse Fourier transformation to the spectrum of equalised line signals and to supply the result thereof, with respect to time, to the decision means (20),

characterised in that the decision means (20) include phase rotation means (21) arranged to transmit, with phase rotation, the equalised time signals to means (22, 23) for measuring phase errors ($\varepsilon_k$) of the said signals with respect to reference signals (âk), the phase error measuring means (22, 23) being arranged to control the equalisation means (15) and the phase rotation means (21).

9. Receiver according to claim 8, wherein the decision means (20) comprise an accumulator circuit (25) arranged in order, depending on the phase errors ($\varepsilon_k$, $u_k$), to address a memory (26) containing a trigonometric table for regulating a digital multiplier circuit (21) transmitting the said subsequent signals to a decision circuit (22) supplying the said errors ($\varepsilon_k$, $u_k$).

10. Receiver according to one of claims 8 and 9, wherein the calculation means are arranged (35) in order, before discrete direct Fourier transformation, to recognise the positions of fixed-size blocks of received signals, each comprising a circular digital pattern, and in order to remove the said pattern therefrom.

11. Receiver according to one of claims 8 and 9, wherein the calculation means are arranged (43) to group the received signals into blocks of a fixed size (L) and in order, after conversion into digital data, to complement (43) each one at one end with a sequence, of a fixed size (N-L), of digital data of zero value running over, in terms of time, onto an adjacent block, before applying the discrete direct Fourier transformation to the complemented blocks, and in order to add together (47) term by term the equalised data which are in the overlapping zones and the equalised signals of the adjacent block which correspond thereto in terms of time.

12. Receiver according to one of claims 8 and 9, wherein the calculation means are arranged (53) in order, before the discrete Fourier transformation, to group the received signals into blocks of a fixed size (N) partially overlapping (N-L) in time, and in order, just after the discrete inverse Fourier transformation, to eliminate (57) the signals obtained (N-L) coming from received signals appertaining to two blocks.

FILTRE OU MODUL. — CANAL — FILTRE — MELANGEUR — EGALISEUR — DEMOD.

OSCILLAT. — ADAPT.

FIG.1

ECHANT. — S/P — TFD — MULTIP — TDFI — P/S

ADAPT.

FIG.2

EP 0 652 663 B1

EP 0 652 663 B1

**FIG.3**

```
[31]          [32]          [1]           [2]      [3]        [4]        [33]        [34]         [35]
MISE     →   AJOUT.   →   FILTRE   →   CANAL  →  FILTRE  →   MEL.   →  FILTRE  →  ECHANT.  →  SYNCH.  →
EN           PREF.        ET
BLOCS                     MODUL.
                                                              ↑
                                                            [5]
                                                           OSCIL.
```

**FIG.4**

```
[41]    [42]         [43]        [44]        [45]        [46]        [47]
   →  ECHANT.   →   S/P    →   TFD    →   MULT.   →   TFDI   →   COR   →
                                  ↑           ↑
                                0,...,0      [48]
                                           ADAPT.
```

**FIG.5**

```
[51]    [52]         [53]        [54]        [55]        [56]        [57]
   →  ECHANT.   →   S/P    →   TFD    →   MULT.   →   TFDI   →   COR   →
                                              ↑
                                             [58]
                                           ADAPT.
```

FIG.6

FIG.7